# EUROPÄISCHE PATENTANMELDUNG

(11) **EP 2 000 519 A2**
(43) Veröffentlichungstag der Anmeldung: **10.12.2008**
(21) Anmeldenummer: 08010240.3
(22) Anmeldetag: 05.06.2008
(51) Int. Cl.: C09K 21/02, E04B 1/94

(54) **Formteil für Brandschutz und Verfahren zur Herstellung eines Formteils**

(30) Priorität: 05.06.2007 DE 102007026970
(71) Anmelder: Techno-Physik Engineering GmbH, 45136 Essen (DE)
(72) Erfinder: Balshüsemann, Uwe, 40547 Düsseldorf (DE); Becker, Jorg, 47279 Duisburg (DE)
(74) Vertreter: Renger, Florian

(57) **Zusammenfassung**

Ein Formteil für Brandschutzanwendungen wie eine Brandschutzplatte weist einen Anteil von etwa 35% an natürlichem Zeolith auf, wobei dieser Zeolith-Anteil großteils eine Korngröße zwischen 0,01 mm und 0,2mm aufweist. Das Trägermaterial ist Vermiculite mit einem Anteil von etwa 40% und einer Korngröße von etwa 1mm bis 2mm, wobei noch Phosphorsäure mit einem Anteil von etwa 24% als Binder und ein Anteil von 1% eines Hydrophobierungsmittels beigefügt ist. Durch die Wahl des natürlichen Zeoliths, seines Anteils und vor allem die Wahl der Korngröße kann eine mechanisch ausreichend feste und bzgl. der Brandschutzeigenschaften sehr gute Brandschutzplatte hergestellt werden.

## Beschreibung

### Anwendungsgebiet und Stand der Technik

Die vorliegende Erfindung betrifft ein Formteil für Brandschutzanwendungen und/oder thermische Dämmung, das entweder als Beschichtung oder vor allem als Brandschutzplatte bzw. als Dämmplatte verwendet werden kann. Ebenso betrifft die Erfindung ein Herstellungsverfahren dafür.

Derartige Brandschutzplatten sind aus der DE 198 40 990 C1 bekannt. Die Verwendung von synthetischem Zeolith ist aus der DE 3738479 A1 bekannt.

Der Erfindung liegt die Aufgabe zu Grunde, ein Formteil der genannten Art sowie ein Herstellungsverfahren zu schaffen, mit denen Probleme des Standes der Technik gelöst werden können und insbesondere die Brandwiderstandsdauer und/oder thermische Dämmfähigkeit von Formteilen oder Beschichtungen verbessert wird, vor allem bei geringerer Dicke des Formteils als Brandschutzplatte.

### Aufgabe und Lösung

Diese Aufgabe wird gelöst durch ein Formteil mit den Merkmalen des Anspruchs 1 sowie Verfahren zur Herstellung eines Formteils mit den Merkmalen des Anspruchs 11 oder 12 und eine Verwendung mit den Merkmalen des Anspruchs 16. Vorteilhafte sowie bevorzugte Ausgestaltungen der Erfindung sind Gegenstand der weiteren Ansprüche und werden im Folgenden näher erläutert. Manche der nachfolgenden Merkmale werden zwar nur entweder für das Formteil oder für ein Herstellungsverfahren erläutert. Sie sollen jedoch unabhängig voneinander sowohl für Formteil als auch für Herstellungsverfahren gelten. Der Wortlaut der Ansprüche wird durch ausdrückliche Bezugnahme zum Inhalt der Beschreibung gemacht, ebenso der Inhalt der Prioritätsanmeldung DE 10 2007 026 970.8 vom 5. Juni 2007. Die Prozentangaben beziehen sich im folgenden auf Gewichtsprozent.

Die Erfindung kennt einerseits die große Bedeutung von Zeolith für Formteile für thermische Dämmung und brandschutztechnischen Maßnahmen. Der für die Dämmung bzw. den Brandschutz wesentliche Mechanismus des Zeoliths besteht in dem großen Energiebedarf, der notwendig ist, um das eingelagerte Kristallwasser aus dem Zeolith auszutreiben. So lagert sich an das stark hydrophile Zeolith sowohl Restwasser als auch Kristallwasser an. Das Restwasser und auch die Restfeuchte in einer Größenordnung von etwa 12% sind nur locker angelagert und treten bei Temperaturen von etwa 110°C aus. Für das Austreiben des Kristallwassers in einer Größenordnung von etwa 18% bis 22% werden Temperaturen von etwa 1000°C benötigt, wobei zum Austreiben des Kristallwassers eine enorme Energiemenge notwendig ist. Diese wird aus einem Brandherd in diese physikalisch-chemische Reaktion eingebracht, was dazu führt, dass die Temperatur in den entsprechenden Bereichen sinkt. Des weiteren hat die Erfindung vor allem erkannt, dass die Verwendung von großteils natürlichem Zeolith von besonders großer und bislang nicht bekannter Bedeutung ist, vor allem für die mechanische Festigkeit der Formteile. Dazu hat die Erfindung vor allem noch die Bedeutung der Korngröße des verwendeten Zeoliths erkannt, die, anders als an sich zu vermuten wäre, erheblich unter derjenigen des Trägermaterials liegen sollte bzw. muss, vor allem auch wegen der mechanischen Festigkeit. So sollte ein Großteil des Zeoliths eine Korngröße deutlich unter derjenigen des Trägermaterials haben, vorteilhaft etwa eine Größenordnung darunter. Mindestens 75% des Zeolith-Anteils sollte eine Korngröße unter 1 mm aufweisen, vorzugsweise zwischen 0,01 mm bzw. 0,001mm und 0,2mm. Insbesondere sollte mindestens 80% oder 95% des Zeolith-Anteils eine Korngröße in diesem Bereich aufweisen. Hier können zwar gewisse Abweichungen akzeptiert werden. Allerdings verschlechtern sich vor allem die mechanischen Eigenschaften mit zunehmendem Anteil größerer Korngrößen. Dies gilt vor allem dann, wenn Vermiculite als Trägermaterial verwendet wird wie nachfolgend beschrieben. Eine Korngröße eines körnigen Trägermaterials kann erheblich größer sein als die Korngröße des Zeolith-Anteils, wobei vorteilhaft der größte Teil bzw. mindestens 95% des Anteils eines körnigen Trägermaterials eine Korngröße zwischen 1 mm und 2mm aufweisen sollte.

Der Zeolith-Anteil liegt vorteilhaft zwischen 5% und 75%, vorzugsweise zwischen 25% und 50%. Vorteilhaft ist mindestens 75% des Zeolith-Anteils natürliches Zeolith, besonders vorteilhaft ist sogar mindestens 95% des Zeolith-Anteils natürliches Zeolith. Dies bedeutet, dass eigentlich ein möglichst großer Anteil des Zeoliths natürlichen Ursprungs sein sollte, geringe Beimischungen oder Anteile von künstlich hergestelltem Zeolith können jedoch enthalten sein, ohne die Eigenschaften zu sehr zu verschlechtern oder den Schutzbereich der Erfindung zu verlassen.

Erfindungsgemäß wird in ein Trägermaterial, z.B. Lack oder eine Masse zur Herstellung eines Formteils, Zeolith entweder in homogener Verteilung oder in wenigstens einer Lage eingebracht, wobei der Zeolith-Anteil in dem Material insgesamt zwischen 2% und 50% liegen sollte, in Zeolith-Schichten des Materials bei inhomogener Einbringung selbstverständlich höher.

Als Trägermaterial können z.B. Minerale folgender Gruppen verwendet werden: Chloride, Oxide und Hydroxide, Fluoride, Carbonate, Sulfate, Borate, Phosphate, Vanadate, Nitrate und Silikate. Vorteilhaft sind auch mineralische Trägermaterialien, wie z.B. Vermiculite, Phlogopit, Gips, Chlorid, Gipshalbhydrat, Anhydrit, Zementphasen, kalkhaltige Phasen, wie Kalzit, Aragonit und Vaterit, Kalkhydrat, wie z.B. Portlandit, quarzhaltige Produkte, Magnesit, Perlit, Silikate wie Tone, Blähtone, Blähschiefer, quellbare Tone und Kaolin, Klebsand, Seltenerdminerale, elementare Verbindungen wie Kohlenstoff, Graphit, Bentonite und diverse Pigmente wie z.B. Rutil. Insbesondere zur Herstellung von Formteilen bzw. Brandschutzplatten sind auch künstlich hergestellte Minerale geeignet wie Kalziumsilikat, z.B. Tobermorit und Xonotlit, geschäumtes Kalziumsilikat, Magnesia, Aluminiumhydroxid, Magnesiumhydroxid und Aluminiumoxid als auch alle Mischkomplexe aus allen vorstehend genannten Materialien. Vor allem Kalziumsilikat ist auch besonders gut geeignet. Es ist faserartig, kann aber auch gut mit dem körnigen bzw. feinkörnigen Zeolith vermengt und verpresst werden. Mögliche faserförmige Trägermaterialien umfassen auch noch Mineralwolle, Steinwolle, Magnesiawolle, Steinfasern, Glasfasern, Zellulosefasern, organische und anorganische Fasern, sowie Kunststofffasern.

Als anorganisch metallische Trägermaterialen eignen sich Eisenlegierungen wie Stahl, verzinkte Bleche, Aluminium-Legierungen, Schaumaluminium und Magnesiumlegierungen besonders.

Gerade im Baubereich sind zur Brandschutzverbesserung von Dekorationspaneelen vor allem Trägermaterialien aus Papier, HPL Laminat und CPL Laminat geeignet (HPL = hot pressure laminated, CPL = cold pressure laminated). Das Zeolith kann beispielsweise in einen laminierten Verbund aus den vorgenannten Materialien eingebracht werden, um die Brandschutzfestigkeit zu erhöhen, wobei durch den Materialverbund ebenfalls anderen Anforderungen, beispielsweise technischer oder ästhetischer Art, Rechnung getragen werden kann.

Obgleich die obige Liste an möglichen Trägermaterialien das breite Anwendungsgebiet des Zeoliths für den Brandschutz deutlich macht, ist es besonders vorteilhaft, Zeolith in Brandschutzplatten bzw. Dämmschutzplatten zu verwenden. Das Material selbst sollte möglichst ein nicht zu hohes Gewicht haben und einen inneren Zusammenhalt, der groß genug ist, um die Zeolith-Körner aufzunehmen und einzubringen. Derartige Materialien sind z.B. Gipsplatten oder Platten aus Schichtsilikaten, insbesondere Vermiculite. Der Vorteil von Schichtsilikaten besteht darin, dass auch diese Kristallwasser und Zwischenschichtwasser eingebunden haben, dessen Austreibung mit ebenfalls einem vergleichsweise hohen Energieaufwand verbunden ist, der jedoch geringer ist als beim Zeolith.

Schichtsilikate, wie insbesondere Vermiculite, zeichnen sich durch eine gute Wärmedämmung und eine hohe Brandfestigkeit aus. Anstelle von Vermiculite können auch verwandte Schichtsilikate wie z.B. Biotit, Phlogopit, Chlorit, Smektit, Hydrobiotit oder Corrensit verwendet werden, um nur einige Alternativen zu nennen.

Die charakteristische Eigenschaft dieser Schichtsilikate besteht in der Anlagerung von Kristallwasser oder von Zwischenschichtwasser und/oder von Zwischenschichtwasser zwischen den Silikatschichten. Im Falle der Temperaturbehandlung hat Vermiculite ein sehr starkes Quellvermögen, so dass man bei entsprechend temperaturbehandelten Schichtsilikaten von geblähten Schichtsilikaten, z.B. geblähtem Vermiculite spricht. Bei nachträglicher Verarbeitung zu Formteilen, z.B. Brandschutzplatten, stellt sich eine Art Gleichgewichtsfeuchte ein, was das Kristallwasser und die Restfeuchte betrifft. Die Restfeuchte wird im Fall der Erwärmung oberhalb der Verdampfungstemperatur des Wassers ausgetrieben, also oberhalb 100°C. Das Austreiben des Kristallwassers ist jedoch mit deutlich höheren Temperaturen und einem höheren Energiebedarf verbunden. Bei einer Erhitzung, beispielsweise im Brandfall, wird somit auch das Kristallwasser abgegeben, was mit einem hohen Energiebedarf verbunden ist und somit zu einer Temperaturverringerung in dem Trägermaterial führt, wenngleich auch bei weitem nicht so deutlich ausgeprägt wie beim Zeolith. Deshalb sind Stoffe aus derartigen Schichtsilikaten sehr gut für Brandschutzmaßnahmen geeignet. Auch wenn nachfolgend nur noch von Vermiculite gesprochen wird, soll klargestellt sein, dass dies auch alle Schichtsilikate mit ähnlichen Eigenschaften umfasst. Aufgrund der Restfeuchte und des Kristallwassers kann das fertige Formteil etwa zwischen 5% und 50% Wasser insgesamt enthalten.

Bei der Verwendung eines Formteils oder einer Platte aus Vermiculite verstärken sich somit die Brandschutzeigenschaften des Vermiculite aufgrund des dort angebundenen Kristallwassers mit den vorteilhaften Brandschutzeigenschaften des Zeoliths, die aufgrund des noch höheren Energiebedarfs im Austreiben des Kristallwassers erheblich höher liegen.

Es gibt erfindungsgemäß mehrere Arten, das Zeolith in das Trägermaterial einzubringen, nämlich entweder homogen verteilt oder in Lagen bzw. Schichten eines wie auch immer gearteten Formteils. Falls das Trägermaterial in flüssiger oder pulvriger Form vorliegt und nachher auch so verwendet werden soll, beispielsweise als Brandschutzbeschichtung in Lack oder Pulverform, wird das Zeolith, gegebenenfalls nach Mahlen auf eine geeignete Körnung, homogen in das Trägermaterial eingemischt und anschließend auf ein zu schützendes Teil aufgebracht. Falls das Zeolith als Lage auf- oder eingebracht wird, kann im Falle eines flüssigen oder pulverförmigen Trägermediums das Zeolith z.B. zuerst elektrostatisch auf das zu beschichtende Teil aufgebracht und anschließend das Trägermaterial darüber pulverisiert oder gespritzt bzw. gestrichen werden. So haftet das Zeolith durch das nachträgliche Aufbringen des Trägermaterials fest an dem zu schützenden Teil an.

Ähnlich geht es bei festen Teilen wie beispielsweise Brandschutzplatten, in welche das Zeolith einfach zu den Grundkomponenten vor der Formgebung des Formteils zugemischt werden kann, so dass es nach dem Formprozess, z.B. Pressen oder Extrudieren, homogen verteilt in dem Formteil vorliegt. Bei der Herstellung eines festen Formteils ist es auch möglich, separate Lagen des Trägermaterials und Zeolith-haltige Lagen einzeln herzustellen und erst nach der Herstellung der Einzellagen zu laminieren und zu einem Gesamtverbund zu verpressen. Die Schichtung kann jedoch auch vor dem Formvorgang, wie z.B. Extrudieren oder Pressen erfolgen, wenn einfach die viskosen oder pulverförmigen Materialien des Trägermaterials und des Zeoliths in unterschiedliche Bereiche der Form bzw. nacheinander in die Form eingeführt werden, beim Extrudieren z.B. in unterschiedliche Bereiche vor der Extrusionsöffnung. Bei einer Pressform wird vorzugsweise zuerst eine Lage Trägermaterial oder Zeolith in die Pressform eingebracht und anschließend alternierend Lagen aus dem jeweils anderen Material, so dass sich ein Verbund mit wenigstens zwei Lagen ergibt. Die Zeolith-Lagen können hierbei entweder durch das Trägermaterial eingeschlossen sein oder außerhalb der Lage des Trägermaterials liegen, je nach den geforderten physikalischen Eigenschaften. Besonders vorteilhaft wird jedoch das Zeolith mit dem Trägermaterial gleichmäßig zu einer Masse gemischt, die dann zu dem Formteil geformt bzw. gepresst wird.

Ein Brandschutz-Material, das insbesondere für Hochtemperaturanwendungen geeignet ist, umfasst vorteilhaft Vermiculite mit entweder lagenweise oder besser noch homogen eingebrachtem Zeolith. Der Vermiculite-Anteil liegt dort vorzugsweise zwischen 20% und 70%, insbesondere 30% und 50% bei vorgenanntem Zeolith-Anteil.

Als Vermiculite wird vorzugsweise geblähtes Vermiculite verwendet, das durch eine vorherige thermische und/oder chemische Behandlung stark aufquillt, bevorzugt um das etwa 15- bis 20-fache, wodurch ein nicht brennbares Material mit einer geringen Dichte und einer niedrigen thermischen Leitfähigkeit entsteht, welches elektrisch nicht leitend ist. Geblähtes Vermiculite ist darüber hinaus chemisch resistent und gesundheitlich unbedenklich. Nach gewerbehygienischen Richtlinien ist geblähtes Vermiculite steril und silikosefrei.

Insbesondere bei der Verwendung einer Vermiculite-/Zeolith-Mischung bzw. eines entsprechenden Verbundes, wird vorteilhaft ein Binder auf Silikat- oder Phosphatbasis verwendet, beispielsweise Wasserglas bzw. Kali-Wasserglas, Phosphorsäure oder verschiedene Phosphatsalze der Phosphorsäure, so z.B. Monoaluminiumphosphat, Natriumhexameterphosphat, Magnesiumphosphat, Natriumaluminiumphosphat, Vorphosphat, Chromphosphat, Polyphosphat oder Mischungen dieser. Es können jedoch auch andere Binder wie Sulfate oder Chloride eingesetzt werden.

Falls eine Vorformung von Zeolith-haltigen Teilen und Trägermaterialien erfolgt, ist es vorteilhaft, wenn bei Trägermaterial und Zeolith der gleiche Binder verwendet wird, so dass sich beim Laminieren dieser Schichten eine möglichst gute Verbindungswirkung zwischen den zu laminierenden Schichten entfaltet. Gegebenenfalls kann ein Binder in einer Menge von etwa 0,1% bis 50% verwendet werden, vorzugsweise 15% bis 35%.

Um das Wasseraufnahmevermögen dieser hoch dämmenden und brandschutzsicheren Formteile zu verringern, kann das Teil mit einem Hydrophobierungsmittel in einer Menge von vorzugsweise 0,01% bis 5% versehen sein, vorteilhaft maximal 2%. Dieses Hydrophobierungsmittel kann bereits mit der Anmischung der Masse für das Formteil homogen eingebracht und/oder anschließend auf die Oberfläche des fertig geformten Formteils aufgebracht werden, so dass das Wasseraufnahmevermögen des Formteils beträchtlich reduziert wird. Als Hydrophobierungsmittel können vorzugsweise Organosilikonverbindungen verwendet werden. Es eignen sich jedoch auch andere Substanzen wie Stearate, Amide, Wachsemulsionen, sowie Produkte auf Wachs-, Fett-, Ölbasis odgl. oder Produkte wie Wasserglas, die erst in einer Reaktion mit anderen Stoffen ihre hydrophoben Eigenschaften entwickeln.

Durch das Einbringen des erfindungsgemäßen Zeoliths können Brandschutzplatten nach DIN 4102 bei gleichbleibender Brandwiderstandsdauer in der Dicke verringert werden, was erhebliche Einsparungen mit sich bringt. Die Dicke kann für F90-Brandschutzplatten auf 30mm bis 35mm reduziert werden, evtl. sogar auf bis zu 25mm.

Bei Herstellung von Formteilen mit Vermiculite darin ist darauf zu achten, dass diese langsam abgekühlt werden, damit keine Spannungen oder Risse in den Platten entstehen.

Zusätzlich zum Trägermaterial, zu einem gegebenenfalls notwenigen Binder und möglichen Hydrophobierungsmitteln ist es möglich, funktionelle Füllstoffe wie z. B. Kalziumsilikat oder Gips in die Formteile einzubringen, wodurch selektiv gewünschte Eigenschaften beeinflusst werden können, wie z. B. Gewicht, Aussehen, Farbe etc..

Bei Herstellung eines mehrlagigen Vermiculite-/Zeolith-Verbunds ist insbesondere ein Zwei- oder Drei-Lagen-Verbund vorteilhaft, wobei bei einem Drei-Lagen-Verbund entweder das Vermiculite innen liegt und die beiden Zeolith-Lagen außen oder die Vermiculite-Lagen außen und die Zeolith-Lage innen. Im Falle der Verwendung von recycelten Vermiculite-Formteilen können alle gewünschten Feinstpartikel, wie z. B. Zeolith, Füllstoffe und Zusatzstoffe, zur Erzielung gewünschter mechanischer/physikalischer Eigenschaften wie beispielsweise Hydrophobierung zwischen die Vermiculite-Lagen eingebracht werden, wodurch der Verbund abgedichtet wird. Die Korngröße des Zeolith-Anteils und der Zuschlagstoffe ist somit auf die Dicke der Vermiculite-Lagen abzustimmen.

Diese und weitere Merkmale gehen außer aus den Ansprüchen auch aus der Beschreibung hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

Eine zeichnerische Darstellung eines Ausführungsbeispiels der Erfindung mit einem Formteil als Brandschutzplatte ist für den Fachmann nicht notwendig, da für ihn eine solche Brandschutzplatte leicht zu realisieren ist anhand der vorstehenden Beschreibung.

Eine vorteilhafte Mischung besteht aus 35% an natürlichem Zeolith, wobei dieser Zeolith-Anteil großteils, also zu mindestens 95%, eine Korngröße zwischen 0,001 mm und 0,2mm aufweist. Das Trägermaterial ist Vermiculite mit einem Anteil von etwa 40% und einer Korngröße von etwa 1 mm bis 2mm, wobei noch Phosphorsäure als Binder mit einem Anteil von etwa 24% und ein Anteil von 1 % eines Hydrophobierungsmittels beigefügt ist. Die Herstellung erfolgt wie zuvor beschrieben.

## Patentansprüche

1. Formteil, insbesondere Brandschutzplatte, für Brandschutzanwendungen und/oder thermische Dämmung, wobei das Formteil ein Trägermaterial und Zeolith aufweist, **dadurch gekennzeichnet, dass** ein Anteil von mindestens 5% bis 75% an natürlichem Zeolith vorgesehen ist und dieser Zeolith-Anteil eine Korngröße zwischen 0mm und 2mm aufweist.

2. Formteil nach Anspruch 1, **dadurch gekennzeichnet, dass** mindestens 75% des Zeolith-Anteils natürliches Zeolith ist, wobei vorzugsweise mindestens 95% des Zeolith-Anteils natürliches Zeolith ist.

3. Formteil nach Anspruch 1 oder 2, **dadurch gekennzeichnet, dass** mindestens 75% des Zeolith-Anteils eine Korngröße von 0mm bis 1 mm aufweist, vorzugsweise zwischen 0mm und 0,2mm, wobei insbesondere mindestens 95% des Zeolith-Anteils diese Korngröße aufweist.

4. Formteil nach einem der vorhergehenden Ansprüche, **dadurch gekennzeichnet, dass** das Trägermaterial ein Schichtsilikat ist, vorzugsweise Vermiculite ist.

5. Formteil nach einem der Ansprüche 1 bis 3, **dadurch gekennzeichnet, dass** das Trägermaterial Kalziumsilikat ist.

6. Formteil nach einem der vorhergehenden Ansprüche, **dadurch gekennzeichnet, dass** eine Korngröße eines körnigen Trägermaterials erheblich größer ist als die Korngröße des Zeolith-Anteils, wobei sie vorzugsweise mindestens 95% des Anteils des Trägermaterials zwischen 1 mm und 2mm liegt.

7. Formteil nach einem der vorhergehenden Ansprüche, **dadurch gekennzeichnet, dass** der Anteil des Trägermaterials zwischen 20% und 70% liegt, insbesondere zwischen 30% und 50%.

8. Formteil nach einem der vorhergehenden Ansprüche, **dadurch gekennzeichnet, dass** ein Binder enthalten ist, vorzugsweise Phosphorsäure, der silikatisch, hydraulisch mit Zement, anhydritisch mit Kalk oder Gips oder organisch ist, wobei insbesondere ein Binder einen Anteil zwischen 5% und 50% aufweist, vorzugsweise zwischen 15% und 35%.

9. Formteil nach einem der vorhergehenden Ansprüche, **dadurch gekennzeichnet, dass** ein Hydrophobierungsmittel enthalten ist, vorzugsweise ein silikonhaltiges Hydrophobierungsmittel, insbesondere mit einem Anteil von maximal 5%, vorzugsweise maximal 2%.

10. Formteil nach einem der vorhergehenden Ansprüche, **dadurch gekennzeichnet, dass** es eine Dicke von weniger als 40mm aufweist, insbesondere 25mm bis 35mm.

11. Verfahren zur Herstellung eines Formteils, insbesondere eines Formteils nach einem der vorhergehenden Ansprüche, bei dem ein Vermiculite enthaltendes oder aus diesem bestehendes Material wie folgt verarbeitet wird:
a) das feingekörnte Material wird gebläht,
b) das geblähte Material wird vorzugsweise in einem Mischer mit wenigstens einem Binder versetzt,
c) Zeolith wird in körniger oder pulvriger Form vor, mit oder nach der Binderzumischung beigemischt, so dass eine homogene Grundzusammensetzung von 20% bis 70% Vermiculite und 5% bis 75% Zeolith enthält,
d) die mit dem Binder versetzte Schüttung wird in einer Formteileinrichtung bei auf das Bindemittel abgestimmten Temperaturen zu dem Formteil verarbeitet,
e) das Formteil werden langsam auf Umgebungstemperatur abgekühlt.

12. Verfahren zur Herstellung eines Formteils, insbesondere eines Formteils nach einem der Ansprüche 1 bis 10, bei dem ein Vermiculite enthaltendes oder aus diesem bestehendes Material wie folgt verarbeitet wird:
a) das feingekörnte Material wird gebläht,
b) das geblähte Material wird vorzugsweise in einem Mischer mit wenigstens einem Binder versetzt,
c) Zeolith wird in körniger oder pulvriger Form vorzugsweise in einem Mischer mit wenigstens einem Binder versetzt,
d) die mit dem Binder versetzte Schüttung des Vermiculite enthaltenden Material einerseits und des Zeoliths andererseits werden in einer Formteileinrichtung bei auf das Bindemittel abgestimmten Temperaturen zu dem Formteil vorverarbeitet und das geformte Formteil aus Vermiculite und Zeolith wird alternierend hintereinander angeordnet und in einer Formteileinrichtung zu dem Formteil verbunden, oder
e) wenigstens eine Lage Vermiculite-haltige Schüttung wird alternierend mit wenigstens einer Lage Zeolith-Schüttung in eine Formteileinrichtung gegeben, in welcher der Schichtenverbund nach Erreichen der gewünschten Lagenanzahl geformt wird,
f) derart, dass die Gesamtzusammensetzung des laminierten Formteils 20% bis 70% Vermiculite und 5% bis 75% Zeolith enthält.

13. Verfahren nach Anspruch 12, **dadurch gekennzeichnet, dass** in den Schritten b) und c) der gleiche Binder verwendet wird, vorzugsweise ein Binder auf Phosphat- oder Silikatbasis.

14. Verfahren nach Anspruch 12 oder 13, **dadurch gekennzeichnet, dass** in den Schritten b) und c) neben dem Binder 0,1 % bis 5% eines Hydrophobierungsmittels zugesetzt wird, vorzugsweise eines silikonhaltigen Hydrophobierungsmittels.

15. Verfahren nach einem der Ansprüche 11 bis 14, **dadurch gekennzeichnet, dass** das Formteil trocken bzw. ohne Zusatz von Wasser selbst hergestellt wird.

16. Verwendung von natürlichem Zeolith mit einer Korngröße zwischen 0,01 mm und 2mm, insbesondere im wesentlichen mit einer Korngröße zwischen 0,01 mm und 0,3mm, als Anteil für Formteile oder Beschichtungen im Brandschutzbereich.
